# EUROPÄISCHE PATENTSCHRIFT

(11) **EP 2 194 441 B1**
(45) Veröffentlichungstag und Bekanntmachung des Hinweises auf die Patenterteilung: **23.03.2011**
(21) Anmeldenummer: 09007682.9
(22) Anmeldetag: 10.06.2009
(51) Int. Cl.: G06F 1/26, G06F 1/32

(54) **Schaltung, Verfahren zum Betrieb einer Schaltung**
Switch, method for operating same
Commutation, procédé de fonctionnement d'une commutation

(30) Priorität: 30.10.2008 DE 102008053900
(43) Veröffentlichungstag der Anmeldung: 09.06.2010
(73) Patentinhaber: Atmel Automotive GmbH, 74072 Heilbronn (DE)
(72) Erfinder: Dathe, Lutz, 01109 Dresden (DE); Hanusch, Thomas, 01640 Coswig (DE); Drescher, Henry, 01445 Radebeul (DE)
(74) Vertreter: Grünecker, Kinkeldey, Stockmair & Schwanhäusser Anwaltssozietät

(56) Entgegenhaltungen:
- WO-A2-02/11242
- WO-A2-2005/043362
- US-A1- 2003 179 524

## Beschreibung

Die vorliegende Erfindung betrifft eine Schaltung mit einem Spannungsregler zur Bereitstellung einer Versorgungsspannung für zumindest eine erste digitale Teilschaltung und eine zweite digitalen Teilschaltung, sowie ein Verfahren zum Betrieb einer Schaltung.

Eine Schaltung eines Funksystems, insbesondere nach dem Industrie-Standard Zigbee, kann mit einer Batterie versorgt werden. ZigBee ist für den Einsatz wartungsfreier Funkschalter und Funksensoren mit Batterieversorgung in schwer oder selten zugänglichen Bereichen vorgesehen. Um aus der Batteriespannung der Batterie die benötigte Versorgungsspannung für digitale Teilschaltungen, wie beispielsweise einem Speicher oder einer Signalverarbeitung, zu erzeugen, kann ein Spannungsregler verwendet werden.

Aus der US 200410263237 A1 ist ein integrierter Halbleiterschaltkreis mit einem Transistor mit nicht-abrupten Schaltverhalten für einen Ruhemodus (engl. sleep) bekannt. Ein Schaltmechanismus reduziert die Amplitude von Spannungsschwankungen auf den Zuleitungen der Versorgungsspannung und reduziert die Zeitspanne zur Stabilisierung der Versorgungsspannung.

Aus der US 2005/0068059 A1 ist ein integrierter Halbleiterschaltkreis mit einer Schaltvorrichtung zwischen einer Logikschaltung und einer Spannungsversorgung bekannt. Ein Spannungsregler ist zur Ausgabe einer Versorgungsspannung über einen PMOS-Transistor mit einem Logikschaltkreis verbunden. Der Spannungsregler ist mit einem Kontrollschaltkreis zur Steuerung des Spannungsreglers verbunden, wobei der Kontrollschaltkreis zur Ausgabe eines Kontrollsignals mit einem Gate des PMOS-Tranistors verbunden ist.

In der US 7,098,689 B1 ist eine Schaltung mit einer Spannungsversorgung offenbart, die über einen ersten PMOS-Transistor mit einem ersten programmierbaren Logikblock und über einen zweiten PMOS-Transistor mit einem zweiten programmierbaren Logikblock verbunden ist.

Aus der US 2003/0179524 A1 und der DE 202 07001 U1 ist eine Steuerungsvorrichtung für Master/Slave Ausgänge in einer Stromversorgungskette mit einem Masterausgang und mindestens einem Slaveausgang, einem mit einer Wechselstromquelle verbundenen Stromsensor und einem von der Stromquelle induzierten Stromsignal, einem mit dem Stromsensor verbundenen Treiber zur Verstärkung des Stromsignals und einem mit der Wechselstromquelle bzw. dem Treiber verbundenen Versorgungsstromschalter zur Steuerung des "EIN" - und des "AUS"-Zustandes der Wechselstromquelle an dem Slaveausgang bekannt. Die Steuerungsvorrichtung ist gekennzeichnet durch eine mit der Wechselstromquelle verbundene Direkt-Kompensations-Versorgungsschaltung, so dass eine Direktspannung in Verbindung mit dem verstärkten Stromsignal erzeugt wird, um den Versorgungsstromschalter nach einer Begrenzung des Stroms und einer Reduzierung der Spannung zu steuern.

Der Erfindung liegt die Aufgabe zu Grunde eine Schaltung möglichst zu verbessern.

Diese Aufgabe wird durch eine Schaltung mit den Merkmalen des unabhängigen Anspruchs 1 gelöst. Vorteilhafte Weiterbildungen sind Gegenstand von abhängigen Ansprüchen und in der Beschreibung enthalten.

Die Schaltung weist einen Spannungsregler mit einem Reglerausgang zur Bereitstellung einer Versorgungsspannung auf. Der Reglerausgang ist zur Versorgung mit zumindest einer ersten digitalen Teilschaltung und einer zweiten Teilschaltung verbindbar. Die Verbindung des Reglerausgangs mit der ersten digitalen Teilschaltung ist über ein erstes Schaltmittel ausgebildet und die Verbindung des Reglerausgangs mit der zweiten digitalen Teilschaltung ist über ein zweites Schaltmittel ausgebildet. Vorzugsweise weist das Schaltmittel zum Schalten einen Halbleiterschalter, wie beispielsweise einen Feldeffekttransistor auf.

Der Spannungsregler ist zur Ausgabe eines von der Versorgungsspannung abhängigen ersten Statussignals an einem Signalausgang des Spannungsreglers ausgebildet. Das Statussignal ist vorteilhafterweise ein digitales Signals, wobei ein Wert einem Status zur Betriebsbereitschaft des Spannungsreglers zugeordnet ist. Vorteilhafterweise ist ein Wert des ersten Statussignals von einer Überschreitung einer Schwellspannung durch die Versorgungsspannung und/oder von einer Amplitude der Regelabweichung abhängig. Zum Einschalten des ersten Schaltmittels mittels des ersten Statussignals ist der Signalausgang des Spannungsreglers mit einem ersten Steuereingang des ersten Schaltmittels verbunden.

Das erste Schaltmittel ist zur Ausgabe eines von seinem Schaltzustand abhängigen zweiten Statussignals an einem Signalausgang des ersten Schaltmittels ausgebildet. Das erste Schaltmittel ist vorzugsweise ausgebildet, den Schaltzustand aus einem Schaltstrom oder einem Spannungsabfall über dem ersten Schaltmittel zu bestimmen. Die Schaltung ist ausgebildet, mittels des zweiten Statussignals das zweite Schaltmittel einzuschalten. Hierzu ist der Signalausgang des ersten Schaltmittels mit einem zweiten Steuereingang des zweiten Schaltmittels verbunden.

Die erste Teilschaltung wirkt vorteilhafterweise als überwiegend kapazitive Last, so dass das erste Schaltmittel überwiegend einen Ladestrom für die überwiegend kapazitive Last der ersten Teilschattung leistungsarm schaltet. Die zweite Teilschaltung wirkt vorteilhafterweise als überwiegend kapazitive Last, so dass das zweite Schaltmittel überwiegend einen Ladestrom für die überwiegend kapazitive Last der zweiten Teilschaltung leistungsarm schaltet. Vorzugsweise ist die erste Teilschaltung und/oder die zweite Teilschaltung zur Speicherung von digitalen Informationen ausgebildet, wobei die erste Teilschaltung und/oder die zweite Teilschaltung ausgebildet oder verbunden ist, die digitalen Informationen auch bei einer Trennung vom Spannungsregler nicht zu verlieren. Beispielweise ist die erste Teilschaltung und/oder die zweite Teilschaltung als CMOS-Schaltkreis ausgebildet. Vorzugsweise erfolgt das Schalten durch das erste Schaltmittel und/oder das Schaltmittel asynchron und damit unabhängig von einem Systemtakt. Vorzugsweise bilden der Spannungsregler das erste Schaltmittel und das zweite Schaltmittel eine Steuerungskette. Die Steuerungskette bildet dabei bevorzugt keinen geschlossenen Regelkreis.

Die Schaltung ist vorzugsweise auf einem Halbleiterchip monolithisch integriert. Vorzugsweise weist die Schaltung verschiedene Modi auf, wobei vorzugsweise in einem Ruhemodus der Stromverbrauch durch Reduktion der Funktionalität der Schaltung gegenüber einem Betriebsmodus reduziert ist. Bevorzugt ist in einem Tiefschlafmodus der Stromverbrauch minimiert, indem Teile der Schaltung von der Batteriespannung durch Halbleiterschalter getrennt werden.

Der Erfindung liegt weiterhin die Aufgabe zu Grunde ein möglichst verbessertes Verfahren zum Betrieb einer Schaltung anzugeben.

Diese Aufgabe wird durch das Verfahren mit den Merkmalen des unabhängigen Anspruchs 10 gelöst. Vorteilhafte Weiterbildungen sind Gegenstand von abhängigen Ansprüchen und in der Beschreibung enthalten.

Demzufolge ist ein Verfahren zum Betrieb einer Schaltung mit einem Spannungsregler, einer ersten digitalen Teilschaltung und einer zweiten digitalen Teilschaltung vorgesehen.

In dem Verfahren wird der Spannungsregler zunächst eingeschaltet. Vorzugsweise erfolgt das Einschalten in Abhängigkeit von einem Anforderungssignal. Das Anforderungssignal ist beispielsweise ein Aufwecksignal zum Aufwecken aus einem Ruhemodus (engl. sleep mode) oder ein Rücksetzsignal (engl. reset).

Der Spannungsregler gibt in Abhängigkeit von einer Bereitstellung einer Versorgungsspannung ein erstes Statussignal aus. Das erste Statussignal wird dabei beispielsweise durch einen Vergleich der Versorgungsspannung mit einem Schwellwert erzeugt. Das Statussignal ist beispielsweise ein Flankenwechsel eines digitalen Signals.

In Abhängigkeit von dem ersten Statussignal wird mittels eines ersten Schaltmittels die Versorgungsspannung auf die erste digitale Teilschaltung geschaltet. Das erste Statussignal bewirkt dabei ein Einschalten des ersten Schaltmittels, so dass nach einer Schaltphase des ersten Schaltmittels die Versorgungsspannung an der ersten digitalen Teilschaltung anliegt. Das erste Schaltmittel gibt in Abhängigkeit von einem Schaltzustand ein zweites Statussignal aus. Der Schaltzustand wird vorteilhafterweise durch einen Schaltstrom oder eine Schaltspannung ermittelt.

In Abhängigkeit von dem zweiten Statussignal wird mittels eines zweiten Schaltmittels die Versorgungsspannung auf die zweite digitale Teilschaltung geschaltet. Das zweite Statussignal bewirkt dabei ein Einschalten des zweiten Schaltmittels, so dass nach einer Schaltphase des zweiten Schaltmittels die Versorgungsspannung an der zweiten digitalen Teilschaltung anliegt.

Zudem kann vorteilhafterweise ein Spannungsregler, ein erstes Schaltmittel und ein zweites Schaltmittel einer Schaltung als Glieder in einer elektrischen Steuerkette (engl. control chain) verwendet werden. In einer Steuerkette steuert jedes Glied das in der Kette nächstfolgende Glied an. Dies ermöglicht eine voneinander abhängige Steuerung des Spannungsreglers, des ersten Schaltmittels und des zweiten Schaltmittels.

Der Spannungsregler als Glied in der Steuerkette ist vorteilhafterweise zur Ausgabe eines ersten Statussignals zur Steuerung eines Schaltens des ersten

Schaltmittels ausgebildet. Das erste Schaltmittel als folgendes Glied in der Steuerkette ist zur Ausgabe eines zweiten Statussignals zur Steuerung eines Schaltens des zweiten Schaltmittels ausgebildet. Das zweite Schaltmittel als nächstfolgendes Glied in der Steuerkette ist zur Ausgabe eines dritten Statussignals ausgebildet.

Die Schaltung ist vorzugsweise zum Starten einer Unterbrechungsroutine in Abhängigkeit vom dritten Statussignal ausgebildet. Hierbei kann das dritte Statussignal direkt oder über insbesondere weitere Glieder der Steuerkette indirekt das Starten der Unterbrechungsroutine bewirken. Die Unterbrechungsroutine ist beispielsweise in einem Programmablauf in einer Recheneinheit, wie einem Mikrocontroller, implementiert.

Die im Folgenden beschriebenen Weiterbildungen beziehen sich sowohl auf die Schaltung, als auch auf die Verwendung, als auch auf das Verfahren zum Betrieb einer Schaltung. Funktionsmerkmale der Schaltung ergeben sich dabei aus Verfahrensmerkmalen. Verfahrensmerkmale sind aus Funktionen der Schattung ableitbar.

Gemäß einer vorteilhaften Ausgestaltung weist der Spannungsregler einen Steuereingang zum Einschalten des Spannungsreglers auf. Vorzugsweise ist der Steuereingang mit einer Kontrollschaltung zum Steuern des Spannungsreglers durch die Kontrollschaltung verbunden. Bevorzugt ist die Kontrollschaltung zur Ausgabe eines Steuersignals an seinem Steuerausgang in Abhängigkeit von einem Anforderungssignal ausgebildet. Das Steuersignal gelangt zum Einschalten des Spannungsreglers an den Steuereingang des Spannungsreglers. Das Anforderungssignal ist vorteilhafterweise ein Rücksetzsignal (engl. reset) oder aus einem Rücksetzsignal gebildet.

In einer vorteilhaften Ausgestaltung ist die Kontrollschaltung zum Ausschalten mit Steuereingängen des Spannungsreglers und/oder des ersten Schaltmittels und/oder des zweiten Schaltmittels unmittelbar verbunden. Vorzugsweise ist die Kontrollschaltung zur zeitgleichen Ausschaltung des Spannungsreglers und Trennung der Verbindung zwischen Spannungsregler und Teilschaltung durch das erste Schaltmittel und/oder das zweite Schaltmittel ausgebildet.

Gemäß einer anderen vorteilhaften Ausgestaltung ist vorgesehen, dass die Konfrollschaltung zur Steuerung eine Anzahl von Taktschaltern (engl. clock gate) für die erste Teilschaltung und/oder die zweite Teilschaltung ausgebildet ist. Alternativ ist eine Recheneinheit zur Steuerung der Taktschalter für die erste Teilschaltung und/oder die zweite Teilschaltung ausgebildet. Die Kontrollschaltung und/oder die Recheneinheit sind dabei vorteilhafterweise ausgebildet die Taktschalter in Abhängigkeit von den Schaltzuständen des ersten Schaltmittels und des zweiten Schaltmittels zu steuern.

Gemäß einer besonders vorteilhaften Weiterbildung weist die Schaltung eine dritte analoge und/oder digitale Teilschaltung auf. Die dritte Teilschaltung ist über ein drittes Schaltmittel mit dem Reglerausgang zur Versorgung mit der Versorgungsspannung verbindbar. Bevorzugt ist das zweite Schaltmittel zur Ausgabe eines von seinem Schaltzustand abhängigen dritten Statussignals an einem zweiten Statussignalausgang des zweiten Schaltmittels ausgebildet. Vorzugsweise ist der zweite Statussignalausgang zum Einschalten des dritten Schaltmittels mittels des dritten Statussignals mit einem dritten Steuereingang des dritten Schaltmittels verbunden.

Gemäß einer vorteilhaften Weiterbildungsvariante ist ein Eingang der Kontrollschaltung einem Signalausgang des zweiten Schaltmittels zur Ausgabe eines vom Schaltzustand des zweiten Schaltmittels abhängigen dritten Statussignals in einer Steuerkette nachgeschaltet. Vorzugsweise ist der Eingang der Kontrollschaltung mit dem Signalausgang des zweiten Schaltmittels oder mit einem Signalausgang eines dritten Schaltmittels oder folgenden Schaltmittels verbunden.

Bevorzugt ist die Kontrollschaltung zu Ausgabe eines Endstatussignals an einem mit einer Recheneinheit verbundenem Ausgang ausgebildet. Vorteilhafterweise ist die Recheneinheit zur Verlängerung eines Rücksetzsignals bis zum Endstatussignals ausgebildet. Vorzugsweise ist die Recheneinheit zur Aktivierung eines Takts (engl. clock) in Abhängigkeit von dem Endstatussignal ausgebildet. Beispielsweise ist das Endstatussignal ein Freigabesignal zur Freigabe des Programmablaufs der Recheneinheit. Alternativ kann das Endstatussignal das Rücksetzsignal beeinflussen, beispielsweise verlängern.

In Ausgestaltungsvarianten ist vorteilhafterweise vorgesehen, dass die Kontrollschaltung und/oder die Recheneinheit zur Verlängerung eines Rücksetzsignals in Abhängigkeit vom Endstatussignal ausgebildet sind. Vorteilhafterweise weist die Schaltung ein Speicherelement, wie beispielsweise ein Flip-Flop zur Speicherung des Rücksetzsignals auf, wobei die Speicherung vorteilhafterweise durch das Endstatussignal gelöscht wird.

In einer ersten vorteilhaften Weiterbildungsvariante ist vorgesehen, dass eine der Teilschaltungen eine Anzahl von flüchtigen Speichereinheiten (SRAM) aufweist. In einer zweiten vorteilhaften Weiterbildungsvariante ist vorgesehen, dass eine der Teilschaltungen einen digitalen Signalprozessor aufweist. In einer dritten vorteilhaften Weiterbildungsvariante ist vorgesehen, dass eine der Teilschaltungen eine Anzahl von nichtflüchtigen Speichereinheiten (Flash) aufweist.

Gemäß einer bevorzugten Weiterbildung ist vorgesehen, dass das Anforderungssignal aus einem Rücksetzsignal abgeleitet wird oder dem Rücksetzsignal entspricht. In einer anderen Weiterbildung ist vorgesehen, dass das Rücksetzsignal zumindest bis zum Erreichen eines Schaltzustandes des zweiten Schaltmittels verlängert wird. Bevorzugt wird ein Taktsignal für die erste Teilschaltung und/oder die zweite Teilschaltung erst nach einem Erreichen eines Schaltzustandes des zweiten Schaltmittels zur Verbindung des Ausgangs des Spannungsreglers mit der Teilschaltung eingeschaltet.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen
- Fig. 1: einen schematischen Blockschaltplan eines ersten Ausführungsbeispiels einer Schaltung,
- Fig. 2: einen schematischen Blockschaltplan eines zweiten Ausführungsbeispiels einer Schaltung, und
- Fig. 3: ein schematisches Diagramm.

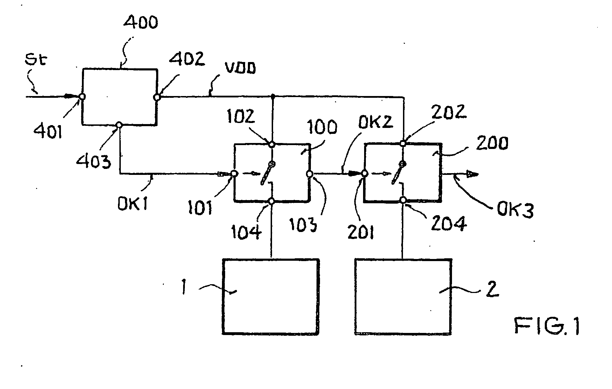

In Fig. 1 ist eine Schaltung durch ein Blockschaltbild schematisch dargestellt. Ein Spannungsregler 400 weist einen Reglerausgang 402 zur Bereitstellung einer Versorgungsspannung VDD für eine erste digitale Teilschaltung 1 und eine zweite digitale Teilschaltung 2 auf. Um den Reglerausgang 402 mit der ersten Teilschaltung 1 beziehungsweise der zweiten Teilschaltung 2 zu verbinden oder zu trennen ist ein erstes Schaltmittel 100 und ein zweites Schaltmittel 200 vorgesehen, deren Eingänge 102 und 202 hierzu mit dem Reglerausgang 402 verbunden sind.

Der Spannungsregler 400 weist einen Steuereingang 401 auf, wobei mittels des Steuersignals St der Spannungsregler 400 eingeschaltet werden kann. Der Spannungsregler 400 weist zudem einen Signalausgang 403 zur Ausgabe eines ersten Statussignals OK1 auf. Das erste Statussignal OK1 ist dabei von der bereitgestellten Versorgungsspannung VDD abhängig.

Der Signalausgang 403 des Spannungsreglers 400 ist im Ausführungsbeispiel der Fig. 1 mit einem ersten Steuereingang 101 des ersten Schaltmittels 100 verbunden. Das erste Schaltmittel 100 weist einen ersten Statussignalausgang 103 auf. Das erste Schaltmittel 100 ist über seinem Ausgang 104 mit der ersten Teilschaltung 1 zum Schalten der Versorgungsspannung VDD auf die erste Teilschaltung 1 verbunden.

Das erste Schaltmittel 100 ist zur Ausgabe eines von seinem Schaltzustand abhängigen zweiten Statussignals OK2 an dem Signalsausgang 103 ausgebildet. Das erste Schaltmittel 100 ist zum Einschalten des zweiten Schaltmittels 200 mittels des zweiten Statussignals OK2 mit dem zweiten Steuereingang 201 des zweiten Schaltmittels 200 verbunden. Das zweite Schaltmittel 200 ist zur Ausgabe eines von seinem Schaltzustand abhängigen dritten Statussignals OK3 an dem Signalsausgang 203 ausgebildet. Das dritte Statussignal OK3 kann zur Steuerung beispielsweise weiterer Schaltmittel oder zur Initiierung einer Programmroutine genutzt werden.

Das zweite Schaltmittel 200 ist über seinen Ausgang 204 mit der zweiten Teilschaltung 2 zum Schalten der Versorgungsspannung VDD auf die zweite Teilschaltung 2 verbunden. Das Schalten des zweiten Schaltmittels 200 wird dabei durch das zweite Statussignal OK2 am Steuereingang 201 gesteuert.

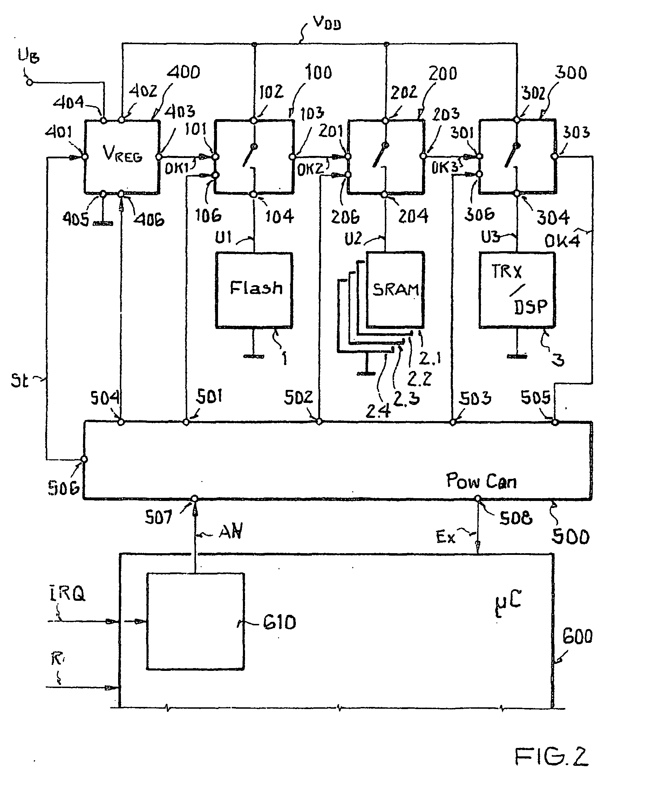

In Fig. 2 ist ein anderes Ausführungsbeispiel einer Schaltung als Blockschaltplan schematisch dargestellt. Ein Spannungsregler 400 (VREG) weist Steuereingänge 401 und 406 und einen Signalausgang 401 zur Ausgabe eines ersten Statussignals OK1 auf. Am Reglerausgang 402 stellt der Spannungsregler 400 die Versorgungsspannung VDD bereit, die mittels des Spannungsreglers 400 aus der Batteriespannung U_{B} erzeugt wird. Hierzu ist der Spannungsregler 400 mit den Anschlüssen 404 an die Batteriespannung U_{B} und 405 an Masse angeschlossen.

Die Schaltung des Ausführungsbeispiels der Fig. 2 weist ein erstes Schaltmittel 100, ein zweites Schaltmittel 200 und ein drittes Schaltmittel 300 auf. Die Schaltmittel 100, 200, 300 sind vorzugsweise Schaltungen, die ein Schaltelement, in Form eines Schalttransistors, beispielsweise eines MOSFETs oder DMOS, aufweisen. Jedes Schaltmittel 100, 200, 300 weist Steuereingänge 101, 106, 201, 206, 301, 306, mit dem Reglerausgang 402 verbundene Eingänge 102, 202, 302, Signalausgänge 103, 203, 303 und mit Teilschaltungen 1, 2, 3 verbundene Ausgänge 104, 204 und 304 auf. Über den Teilschaltungen 1, 2, 3 fallen dabei die Spannungen U1, U2 respektive U3 ab. Jedes Schaltmittel 100, 200, 300 ist zur Ausgabe eines von seinem Schaltzustand abhängigen Statussignals OK2, OK3 beziehungsweise OK4 ausgebildet.

Weiterhin weist die Schaltung des Ausführungsbeispiels der Fig. 2 eine Kontrollschaltung 500 auf, die über einen Eingang 507 und einen Ausgang 508 mit einer Recheneinheit 600 beispielsweise einem Mikrocontroller (uC) verbunden ist. Die Recheneinheit 600 weist Eingänge oder Schaltungsbereiche für Signale, beispielsweise einem Rücksetzsignal R oder einem Unterbrechungssignal IRQ auf. Hierzu kann die Recheneinheit 600 beispielsweise eine Wach-Schlaf-Steuerschaltung 610 (engl. sleep controller) aufweisen.

Im ausgeschalteter Zustand des Spannungsreglers 400 kann die Recheneinheit 600 ein Anforderungssignal AN an den Eingang 507 der Kontrollschaltung 500 senden. Das Anforderungssignal AN stellt dabei die Anforderung auf einen Zugriff auf eine oder mehrere der Teilschaltungen 1, 2, 3 dar. Auf das Anforderungssignal AN hin steuert die Kontrollschaltung 500 mittels des Steuersignals St den Spannungsregler 400 und schaltet diesen ein. Der Spannungsregler generiert bei eingeregelter Versorgungsspannung VDD ein erstes Statussignal OK1. Als nächstes Glied in einer Steuerkette wird das erste Schaltmittel 100 durch das erste Statussignal OK1 gesteuert und verbindet den Reglerausgang 402 mit einem Flashspeicher (Flash) als erste digitale Teilschaltung 100.

Das erste Schaltmittel 100 erzeugt abhängig vom Schaltzustand ein zweites Statussignal OK2, das das zweite Schaltmittel 200 steuert und so den Reglerausgang 402 mit statischen Speicherblöcken (SRAM) als zweite Teilschaltung 200 verbindet. Anstelle eines einzigen im Ausführungsbeispiel der Fig. 2 dargestellten Ausgangs 204 des zweiten Schaltmittels 200 können auch vier Ausgänge (nicht dargestellt) zur Verbindung mit jeweils einem Speicherblock 2.1, 2.2, 2.3, 2.4 vorgesehen sein, wobei das zweite Schaltmittel in diesem (nicht dargestellten) Ausführungsbeispiel die einzelnen Speicherblöcke 2.1, 2.2, 2.3, 2.4 nacheinander mit dem Reglerausgang 402 verbindet.

Im Ausführungsbeispiel der Fig. 2 generiert das zweite Schaltmittel 200 schaltzustandsabhängig ein drittes Statussignal OK3, dass ein drittes Schaltmittel 300 steuert, so dass das dritte Schaltmittel 300 den Reglerausgang 402 mit einem analogen/digitalen Transceiver (TRX) und einem digitalen Signalprozessor (DSP) als dritte Teilschaltung 3 verbindet. Das dritte Schaltmittel 300 generiert ein schaltzustandsabhängiges viertes Statussignal OK4, das an einen Eingang 505 der Kontrollschaltung 500 (PowCon) gelangt. Die Kontrollschaltung 500 erzeugt daraufhin ein Bestätigungssignal Ex, das über den Ausgang 508 zurück an die Recheneinheit 500 übermittelt wird, wobei die Recheneinheit 500 in Abhängigkeit von dem Bestätigungssignal Ex eine Programmroutine mit späteren Zugriffen auf zumindest eine der Teilschaltungen 1, 2, 3 startet.

Die Kontrollschaltung 500 ist über die Ausgänge 501, 502, 503 und 504 und die Steuereingänge 106, 206, 306 und 406 zur Steuerung eines Ausschaltens des Spannungsreglers 400 und zur Steuerung einer Trennung durch die Schaltmittel 100, 200 und 300 ausgebildet, um die Schaltung einen Ruhemodus mit reduziertem Stromverbrauch zu versetzen.

Durch das Ausführungsbeispiel der Fig. 2 werden mehrere Vorteile erzielt. Durch die Anordnung des Spannungsreglers 400, des ersten Schaltmittels 100, des zweiten Schaltmittels 200 und des dritten Schaltmittels 300 in einer Steuerkette werden unzulässige Überlappungen von Signalflanken vermieden. Derartige Überlappungen könnten zu einer Funktionsstörung der Teilschaltungen 1, 2, 3 führen und beispielsweise bei einem Spannungseinbruch zu einem Löschen gespeicherter Informationen führen. Durch das Ausführungsbeispiel der Fig. 2 werden daher vorteilhaft zeitliche Signalunbestimmtheiten (engl. RACE-Condition) vermieden. Mittels der Steuerkette des Ausführungsbeispiel der Fig. 2 werden Einschaltstromspitzen, die beispielsweise durch eine rein zeitliche Steuerung der Schaltmittel 100, 200, 300 und daher bei einer möglichen zeitlichen

Überlappung von Strömen entstehen könnten ausgeschlossen. Aufgrund der asynchronen Steuerung der Schaltmittel wird kein Takt benötigt, der im Verlauf des Einschaltens daher nicht zur Verfügung stehen braucht und vorteilhafterweise erst später mittels Taktschaltern (Tore) zugeschaltet wird. Beispielsweise wird das Taktsignal (engl. clock) abhängig vom Bestätigungssignal Ex geschaltet.

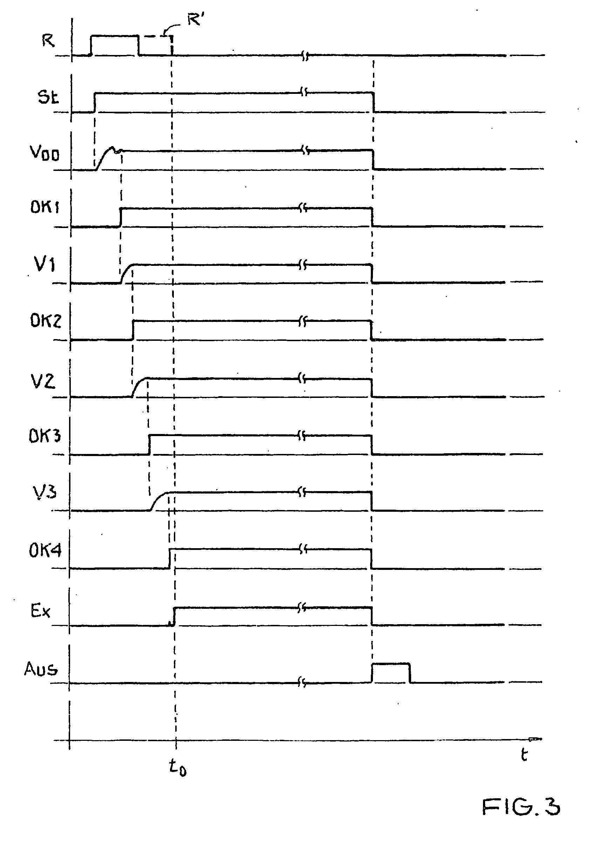

In Fig. 3 ist ein Diagramm schematisch dargestellt, mit dessen Hilfe sich Verfahrensschritte eines Verfahrens zum Betrieb einer Schaltung gemäß dem Ausführungsbeispiel der Fig. 1 oder dem Ausführungsbeispiel der Fig. 2 erläutern lässt.

In Fig. 3 ist als Anforderungssignal ein Rücksetzsignal R dargestellt. In Abhängigkeit von dem Anforderungssignal R wird der Spannungsregler durch das Steuersignal St eingeschaltet. Mit dem Einschalten des Spannungsreglers steigt die an seinem Ausgang bereitgestellte Versorgungsspannung VDD an.

Stimmt ein Istwert der Versorgungsspannung VDD mit einem Sollwert der Versorgungsspannung hinreichend überein, gibt der Spannungsregler der Übereinstimmung abhängig ein erstes Statussignal OK1 aus.

In Abhängigkeit von dem ersten Statussignal OK1 schaltet ein erstes Schaltmittel die am Reglerausgang des Spannungsreglers bereitgestellte Versorgungsspannung VDD auf die erste digitale Teilschaltung. Hierbei steigt die über der ersten digitalen Teilschaltung anliegende Spannung U1 auf den Wert der Versorgungsspannung VDD an. In Abhängigkeit von einem Schaltzustand, der beispielsweise durch einen Vergleich der anliegenden Spannung U1 mit der Versorgungsspannung definiert ist, gibt das zweite Schaltmittel ein zweites Statussignal OK2 aus.

In Abhängigkeit von dem zweiten Statussignal OK2 schaltet ein zweites Schaltmittel die am Reglerausgang des Spannungsreglers bereitgestellte Versorgungsspannung VDD auf die zweite digitale Teilschaltung. Hierbei steigt die über der zweiten digitalen Teilschaltung anliegende Spannung U2 auf den Wert der Versorgungsspannung VDD an. In Abhängigkeit von einem Schaltzustand, der beispielsweise durch einen Vergleich der anliegenden Spannung U2 mit der Versorgungsspannung VDD definiert ist, gibt das zweite Schaltmittel ein drittes Statussignal OK3 aus.

In Abhängigkeit von dem dritten Statussignal OK3 schaltet ein drittes Schaltmittel die am Reglerausgang des Spannungsreglers bereitgestellte Versorgungsspannung VDD auf eine dritte analoge und/oder digitale Teilschaltung. Hierbei steigt die über der dritten Teilschaltung anliegende Spannung U3 auf den Wert der Versorgungsspannung VDD an. In Abhängigkeit von einem Schaltzustand, der beispielsweise durch einen Vergleich der anliegenden Spannung U3 mit der Versorgungsspannung VDD definiert ist, gibt das dritte Schaltmittel ein viertes Statussignal OK4 aus.

Im Ausführungsbeispiel der Fig. 3 ist das vierte Statussignal OK4 vom dritten Statussignal OK3 über die Funktion des dritten Schaltmittels abhängig. Das dritte Statussignal OK3 ist vom zweiten Statussignal OK2 über die Funktion des zweiten Schaltmittels abhängig. Das zweite Statussignal OK2 ist vom ersten Statussignal OK1 über die Funktion des ersten Schaltmittels abhängig. Vom vierten Statussignal OK4 abhängig wird ein Signal Ex erzeugt, das einem Status einer vollständigen Abarbeitung einer Steuerkette aus dem Spannungsregler und den Schaltmitteln zugeordnet ist.

Das Rücksetzsignal R wird bis zum Signal Ex verlängert, indem das Rücksetzsignal R bis zum Zeitpunkt t0 gespeichert und durch das Signal Ex wieder zurückgesetzt wird. Der Verlauf des gespeicherten Rücksetzsignals R' ist ebenfalls dargestellt.

Auch ein Ausschalten des Spannungsreglers und ein Trennen des Reglerausgangs des Spannungsreglers von den Teilschaltungen mittels der Schaltmittel sind möglich. Hierzu wird das Signal AUS generiert, das ein gleichzeitiges Trennen der Schaltmittel bewirkt. Zudem wird zeitgleich der Spannungsregler ausgeschaltet. Je nach den in der Schaltung vorhandenen Widerständen können die Entladungskurven auch flacher als dargestellt ausfallen.

Die Erfindung ist nicht auf die dargestellten Ausgestaltungsvarianten der Figuren 1 bis 3 beschränkt. Beispielsweise ist es möglich eine größere Anzahl von Schaltmitteln für eine größere Anzahl analoger und/oder digitaler Teilschaltungen in der Steuerkette vorzusehen. Auch ist es vorteilhaft das SRAM 2.1, 2.2, 2.3, 2.4 in der Steuerkette am Anfang vorzusehen, so dass das SRAM unmittelbar nach dem Spannungsregler eingeschaltet wird (In Fig. 2 nicht dargestellt). Alternativ ist es auch möglich das SRAM in der Steuerungskette am Schluss vorzusehen, so dass das SRAM nach allen anderen Teilschaltungen mit der Ausgangsspannung des Spannungsreglers versorgt wird (in Fig. 2 nicht dargestellt). Die Funktionalität des Schaltkreises gemäß Fig. 2 kann besonders vorteilhaft für ein universelles Funksystem insbesondere nach dem Industrie-Standard IEEE 802.15.4 verwendet werden.

### Bezugszeichenliste

- 1,2: digitale Teilschaltung
- 2.1, 2.2, 2.3, 2.4: Speicherblock (SRAM)
- 3: analoge/digitale Teilschaltung
- 100, 200, 300: Schaltmittel
- 101, 106, 201, 206, 301, 306,: Steuereingang
- 401, 406:
- 102, 202, 302: Eingang
- 103, 203, 303, 403: Signalausgang
- 104,204,304: Ausgang
- 400: Spannungsregler
- 402: Reglerausgang
- 404: Eingangsspannungsanschluss
- 405: Masseanschluss
- 500: Kontrollschaltung
- 501, 502, 503, 504, 506, 508: Steuerausgang
- 505, 507: Eingang
- 600: Recheneinheit, Mikrocontroller
- 610: Wach-Schlaf-Steuerschaltung (engl. sleep controller)
- An: Anforderungssignal
- Aus: Ausschaltsignal
- Ex: Eriedigungssignal
- IRQ: Unterbrechungssignal
- OK1, OK2, OK3, OK4: Statussignal
- R, R': Rücksetzsignal (reset)
- St: Steuersignal
- t, t0: Zeit, Zeitpunkt
- U1, U2, U3: Spannung
- U_{B}: Batteriespannung
- VDD: Versorgungsspannung

## Patentansprüche

1. Schaltung
- mit einer ersten digitalen Teilschaltung (1),
- mit einer zweiten digitalen Teilschaltung (2),
- mit einem ersten Schaltmittel (100),
- mit einem zweiten Schaltmittel (200) und
- mit einem Spannungsregler (400),
- wobei der Spannungsregler (400) einen Reglerausgang (402) zur Bereitstellung einer Versorgungsspannung (VDD) aufweist, und der Spannungsregler (400) zur Ausgabe eines von der Versorgungsspannung (VDD) abhängigen ersten Statussignals (OK1) ausgebildet und und zum Einschalten des ersten Schaltmittels (100) mittels des ersten Statussignals (OK1) mit einem ersten Steuereingang (101) des ersten Schaltmittels verbunden ist;
- **dadurch gekennzeichnet, dass** der Spannungsregler (400) zur Versorgung mit zumindest der ersten digitalen Teilschaltung (1) über das erste Schaltmittel (100) und der zweiten digitalen Teilschaltung (2) über das zweite Schaltmittel (200) verbindbar ist, und
- dass das erste Schaltmittel (100) zur Ausgabe eines von seinem Schaltzustand abhängigen zweiten Statussignals (OK2) ausgebildet und zum Einschalten des zweiten Schaltmittels (200) mittels des zweiten Statussignals (OK2) mit einem zweiten Steuereingang (201) des zweiten Schaltmittels (200) verbunden ist.

2. Schaltung nach Anspruch 1,
- bei der der Spannungsregler (400) einen Steuereingang (401) zum Einschalten des Spannungsreglers (400) aufweist, der mit einer Kontrollschaltung (500) verbunden ist, und
- bei der die Kontrollschaftung (500) zur Ausgabe eines Steuersignals (St) zum Einschalten an den Steuereingang (401) des Spannungsreglers (400) aufgrund eines Anforderungssignals (IRQ, R) ausgebildet ist.

3. Schaltung nach einem der vorhergehenden Ansprüche,
- bei der die Kontrollschaltung (500) zum Ausschalten mit Steuereingängen (106, 206, 406) des Spannungsreglers (400) und/oder des ersten Schaltmittels (100) und/oder des zweiten Schaltmittels (200) unmittelbar verbunden ist.

4. Schaltung nach einem der vorhergehenden Ansprüche,
- bei der die Kontrollschaltung (500) zur Steuerung einer Anzahl von Taktschaltern für die erste Teilschaltung (1) und/oder die zweite Teilschaltung (2) ausgebildet ist.

5. Schaltung nach einem der vorhergehenden Ansprüche,
- mit einer dritten analogen und/oder digitalen Teilschaltung (3), die über ein drittes Schaltmittel (300) mit dem Reglerausgang (402) zur Versorgung verbindbar ist,
- bei der das zweite Schaltmittel (200) zur Ausgabe eines von seinem Schaltzustand abhängigen dritten Statussignals (OK3) ausgebildet und zum Einschalten des dritten Schaltmittels (300) mittels des dritten Statussignals (OK3) mit einem dritten Steuereingang (301) des dritten Schaltmittels (300) verbunden ist.

6. Schaltung nach einem der vorhergehenden Ansprüche,
- bei der ein Eingang (505) der Kontrollschaltung (500) einem Signalausgang (203) des zweiten Schaltmittels (200) zur Ausgabe eines vom Schaltzustand des zweiten Schaltmittels (200) abhängigen dritten Statussignals (OK3) nachgeschaltet, insbesondere mit dem Signalausgang (203) des zweiten Schaltmittels (200) oder mit einem Signalausgang (303) eines dritten Schaltmittels (300) oder folgenden Schaltmittels verbunden ist.

7. Schaltung nach einem der vorhergehenden Ansprüche,
- bei der die Kontrollschaltung (500) zu Ausgabe eines Endstatussignal (Ex) an einem mit einer Recheneinheit (600) verbundenem Ausgang (508) ausgebildet ist.

8. Schaltung nach Anspruch 7,
- bei der die Kontrollschaltung (500) und/oder die Recheneinheit (600) zur Verlängerung eines Rücksetzsignals (R) in Abhängigkeit vom Endstatussignal (Ex) ausgebildet sind.

9. Schaltung nach einem der vorhergehenden Ansprüche,
- bei der eine der Teilschaltungen (1, 2, 3) eine Anzahl von flüchtigen Speichereinheiten (SRAM, 2.1, 2.2, 2.3, 2.4) aufweist, und/oder
- bei der eine der Teilschaltungen (1, 2, 3) einen digitalen Signalprozessor aufweist, und/oder
- bei der eine der Teilschaltungen (1, 2, 3) eine Anzahl von nichtflüchtigen Speichereinheiten (Flash-Speicher) aufweist.

10. Verfahren zum Betrieb einer Schaltung mit einem Spannungsregler (400), einer ersten digitalen Teilschaltung (1) und einer zweiten digitalen Teilschaltung (2),
**dadurch gekennzeichnet**
- **dass** insbesondere in Abhängigkeit von einem Anforderungssignal (R, An, St) der Spannungsregler (400) eingeschaltet wird,
- **dass** der Spannungsregler (400) in Abhängigkeit von seiner Bereitstellung einer Versorgungsspannung (VDD) ein erstes Statussignal (OK1) ausgibt,
- **dass** in Abhängigkeit von dem ersten Statussignal (OK1) die Versorgungsspannung (VDD) von einem ersten Schaltmittel (100) auf die erste digitale Teilschaltung (1) geschaltet und vom ersten Schaltmittel (100) in Abhängigkeit von seinem Schaltzustand ein zweites Statussignal (OK2) ausgegeben wird, und
- **dass** in Abhängigkeit von dem zweiten Statussignal (OK2) die Versorgungsspannung (VDD) von einem zweiten Schaltmittel (200) auf die zweite digitale Teilschaltung (2) geschaltet wird.

11. Verfahren nach Anspruch 10,
- bei dem das Anforderungssignal (R) aus einem Rücksetzsignal (R) abgeleitet wird oder dem Rücksetzsignal (R) entspricht, und
- bei dem das Rücksetzsignal (R) zumindest bis zum Erreichen eines Schaltzustandes des zweiten Schaltmittels (200) verlängert wird.

12. Verfahren nach einem der Ansprüche 10 oder 11,
- bei dem ein Taktsignal für die erste Teilschaltung (1) und/oder die zweite Teilschaltung (2) nach einem Erreichen eines Schaltzustandes des zweiten Schaltmittels (200) eingeschaltet wird.

## Claims

1. Circuit comprising
- a first digital part circuit (1),
- a second digital part circuit (2),
- a first switching means (100),
- a second switching means (200), and
- a voltage regulator (400),
- wherein the voltage regulator (400) has a regulator output (402) for providing a supply voltage (VDD) and the voltage regulator (400) is constructed for output of a first status signal (OK1) dependent on the supply voltage (VDD) and, for switching on the first switching means (100) by way of the first status signal (OK1), is connected with a first control input (101) of the first switching means;
- **characterised in that** the voltage regulator (400) is, for power supply, connectible with at least the first digital part circuit (1) by way of the first switching means (100) and the second digital part circuit (2) by way of the second switching means (200), and
- that the first switching means (100) is constructed for output of a second status signal (OK2) dependent on its switching state and, for switching on the second switching means (200) by way of the second status signal (OK2), is connected with a second control input (201) of the second switching means (200).

2. Circuit according to claim 1,
- in which the voltage regulator (400) has a control input (401) for switching on the voltage regulator (400), which is connected with a control circuit (500), and
- in which the control circuit (500) is constructed for output of a control signal (St) for switching on at the control input (401) of the voltage regulator (400) by way of a demand signal (IRQ, R).

3. Circuit according to one of the preceding claims,
- in which the control circuit (500) is, for the switching off, directly corrected with control inputs (106, 206, 406) of the voltage regulator (400) and/or of the first switching means (100) and/or of the second switching means (200).

4. Circuit according any one of the preceding claims,
- in which the control circuit (500) is constructed for controlling a number of timing switches for the first part circuit (100) and/or the second part circuit (2).

5. Circuit according to any one of the preceding claims,
- with a third analog and/or digital part circuit (3), which is connectible by way of a third switching means (300) with the regulator output (402) for the power supply, and
- in which the second switching means (200) is constructed for output of a third status signal (OK3) dependent on its switching state and is, for switching on the third switching means (300) by way of the third status signal (OK3), connected with a third control input (301) of the third switching means (300).

6. Circuit according to any of the preceding claims,
- in which an input (505) of the control circuit (500) is connected downstream of a signal output (203) of the second switching means (200) for output of a third status signal (OK3) dependent on the switching state of the second switching means (200), in particular is connected with the signal output (203) of the second switching means (200) or with a signal output (303) of a third switching means (300) or following switching means.

7. Circuit according to any one of the preceding claims,
- in which the control circuit (500) is constructed for output of an end status signal (Ex) at an output (508) connected with a computer unit (600).

8. Circuit according to claim 7,
- in which the control circuit (500) and/or the computer unit (600) is or are constructed for prolonging a reset signal (R) in dependence on the end status signal (Ex).

9. Circuit according to any one of the preceding claims,
- in which one of the part circuits (1, 2, 3) comprises a number of volatile memory units (SRAM 2.1, 2.2, 2.3, 2.4) and/or
- in which one of the part circuits (1, 2, 3) comprises a digital signal processor and/or
- in which one of the part circuits (1, 2, 3) comprises a number of non-volatile memory units (flash memories).

10. Method of operating a circuit with a voltage regulator (400), a first digital part circuit (1) and a second digital part circuit (2), **characterised in that**
- the voltage regulator (400) is switched on, in particular, in dependence on a demand signal (R, An, St),
- the voltage regulator (400) issues a first status signal (OK1) in dependence on its provision of a supply voltage (VDD),
- the supply voltage (VDD) is connected by a first switching means (100) to the first digital part circuit (1) in dependence on the first status signal (OK1) and a second status signal (OK2) is issued by the first switching means (100) in dependence on its switching state and
- the supply voltage (VDD) is connected by a second switching means (200) to the second digital part circuit (2) in dependence on the second status signal (OK2).

11. Method according to claim 10,
- in which the demand signal (R) is derived from a reset signal (R) or corresponds with the reset signal (R) and
- in which the reset signal (R) is prolonged at least until attainment of a switching state of the second switching means (200).

12. Method according to one of claims 10 and 11,
- in which a clock signal for the first part circuit (1) and/or the second part signal (2) is switched-on after attainment of switching state of the second switching means (200).

## Revendications

1. Circuit comprenant
. un premier sous-circuit numérique (1)
. un deuxième sous-circuit numérique (2)
. un premier moyen de commutation (100)
. un deuxième moyen de commutation (200) et
. un régulateur de tension (400) dans lequel
. le régulateur de tension (400) présente une sortie de régulateur (402) pour la fourniture d'une tension d'alimentation (VDD) et le régulateur de tension (400) est prévu pour délivrer un premier signal d'état (OK1) dépendant de la tension d'alimentation (VDD) et est relié à une première entrée de commande (101) du premier moyen de commutation pour mettre en circuit le premier moyen de commutation (100) à l'aide du premier signal d'état (OK1)
**caractérisé en ce que**
le régulateur de tension (400) pour l'alimentation peut être relié à au moins au premier sous-circuit numérique (1) à travers le premier moyen de commutation (100) et au deuxième sous-circuit numérique (2) par le deuxième moyen de commutation (200)
et **en ce que** le premier moyen de commutation (100) est prévu pour délivrer un deuxième signal d'état (OK2) dépendant de son état de commutation et pour mettre en circuit le deuxième moyen de commutation (200) par le deuxième signal d'état (OK2) est relié à une deuxième entrée (201) de commande du deuxième moyen de commutation (200).

2. Circuit selon la revendication 1
. dans lequel le régulateur de tension (400) présente une entrée de commande (401) pour la mise en circuit du régulateur de tension (400) qui est relié à un circuit de contrôle (500), et
. dans lequel le circuit de contrôle (500) est prévu pour la délivrance d'un signal de commande (St) pour la mise en circuit sur l'entrée de commande (401) du régulateur de tension (400) à partir d'un signal de requête (IRQ,R).

3. Circuit selon l'une des revendications précédentes dans lequel le circuit de contrôle (500) pour la mise hors circuit est relié directement aux entrées (106, 206, 406) du régulateur de tension (400) et/ou du premier moyen de commutation (100) et/ou du deuxième moyen de commutation (200).

4. Circuit selon l'une des revendications précédentes dans lequel le circuit de contrôle (500) est prévu pour commander un nombre d'impulsions de commutation pour le premier sous-circuit (1) et/ou le deuxième sous-circuit (2).

5. Circuit selon l'une des revendications précédentes comprenant un troisième sous-circuit (3) analogique ou numérique, qui est relié à une sortie de régulation (402) à travers un troisième moyen de commutation (300) pour l'alimentation et dans lequel le deuxième moyen de commutation (200) est prévu pour la délivrance d'un troisième signal d'état (OK3) dépendant de son état de commutation et dans lequel il est relié à une troisième entrée de commande (301) du troisième moyen de commutation (300) pour la mise en circuit du troisième moyen de commutation (300) par un troisième signal d'état (OK3).

6. Circuit selon l'une des revendications précédentes dans lequel une entrée (505) du circuit de contrôle (500) est reliée, en aval, à une sortie de signal (203) du deuxième moyen de commutation (200) pour la délivrance d'un troisième signal d'état (OK3) dépendant de l'état de commutation du deuxième moyen de commutation (200) en particulier reliée à la sortie de signal (203) du deuxième moyen de commutation (200) ou à une entrée (303) d'un troisième moyen de commutation (300) ou d'un moyen de commutation suivant.

7. Circuit selon l'une des revendications précédentes dans lequel le circuit de contrôle (500) pour la délivrance d'un signal d'état de fin (Ex) présente une sortie (508) reliée à une unité de calcul (600).

8. Circuit selon la revendication 7 dans lequel le circuit de contrôle (500) et/ou l'unité de calcul (600) sont/est prévu(s) pour l'augmentation de durée d'un signal de remise à zéro (R) en fonction du signal d'état de fin (Ex).

9. Circuit selon l'une des revendications précédentes dans lequel :
. un des sous-circuits (1, 2, 3) présente un nombre de mémoires volatiles (SDRAM, 2.1, 2.2, 2.3, 2.4) et/ou
. un des sous-circuits (1, 2, 3) présente un processeur de signal numérique, et/ou
. un des sous-circuits (1, 2, 3) présente un nombre de mémoires non volatiles (mémoires flash).

10. Procédé de fonctionnement d'un circuit comportant un régulateur de tension (400), un premier sous-circuit numérique (1) et un deuxième sous-circuit numérique (2)
**caractérisé en ce que**
. le régulateur de tension (400) est mis en circuit en particulier en fonction d'un signal de requête (R, An, St)
. le régulateur de tension (400) délivre en fonction de la disponibilité d'une tension d'alimentation (VDD) un premier signal d'état (OK1)
. on applique la tension d'alimentation (VDD) d'un premier moyen de commutation (100) au premier sous-circuit numérique (1) en fonction du premier signal d'état (OK1) et on émet par le premier moyen de commutation (100) en fonction de son état de commutation, un deuxième signal d'état (OK2)
. on applique la tension d'alimentation (VDD) d'un deuxième moyen de commutation (200) au deuxième sous-circuit numérique divisionnaire (2) en fonction du deuxième signal d'état (OK2)

11. Procédé selon la revendication 10 dans lequel
. le signal de requête (R) est dérivé d'un signal de remise à zéro (R) ou correspond au signal de remise à zéro (R)
. le signal de remise à zéro (R) est prolongé au moins jusqu'à atteindre un état de commutation du deuxième moyen de commutation (200).

12. Procédé selon l'une des revendications 10 ou 11 dans lequel un signal de séquencement est appliqué au premier sous-circuit et/ou au deuxième sous-circuit (2) après avoir atteint un état de commutation du deuxième moyen de commutation.
